# EUROPÄISCHE PATENTSCHRIFT

(11) **EP 3 115 712 B1**
(45) Veröffentlichungstag und Bekanntmachung des Hinweises auf die Patenterteilung: **06.06.2018**
(21) Anmeldenummer: 16177996.2
(22) Anmeldetag: 05.07.2016
(51) Int. Cl.: F24T 10/00

(54) **VERFAHREN UND ANLAGE ZUR VERRINGERUNG DES SCALINGS BEI DER ENERGIEGEWINNUNG AUS GEOTHERMISCHER ENERGIE**
METHOD AND PLANT FOR REDUCING SCALING IN ENERGY RECOVERY FROM GEOTHERMAL ENERGY
PROCÉDÉ ET DISPOSITIF DE RÉDUCTION DE DÉPÔTS DE CALCAIRE LORS DE LA RÉCUPÉRATION D'ÉNERGIE À PARTIR D'ÉNERGIE GÉOTHERMIQUE

(30) Priorität: 09.07.2015 DE 102015111145
(43) Veröffentlichungstag der Anmeldung: 11.01.2017
(73) Patentinhaber: Trias V&M GmbH, 93055 Regensburg (DE); Kapp, Bernd, 1758 Feldbergr Seenlandschaft (DE)
(72) Erfinder: Kapp, Bernd, 17258 Feldberger Seenlandschaft (DE)
(74) Vertreter: Glück Kritzenberger Patentanwälte PartGmbB

(56) Entgegenhaltungen:
- EP-A2- 2 253 799
- WO-A1-2014/122334
- KR-B1- 101 150 596
- US-A- 5 965 031
- US-A1- 2008 073 058

## Beschreibung

### Technisches Gebiet

Die Erfindung bezieht sich auf ein Verfahren und eine Anlage zur Energiegewinnung aus geothermischer Energie.

### Stand der Technik

Unter "Energiegewinnung aus geothermischer Energie" wird die Nutzung der geothermischen Energie verstanden, welche in heißen Tiefenwässern oder in heißen, trockenen, tiefliegenden Gesteinsschichten enthalten ist. Zur öbertägigen Nutzung der geothermischen Energie wird in das heiße, trockene Gestein gepumptes Wasser oder das heiße Tiefenwasser selbst über eine Förderbohrung an die Erdoberfläche gepumpt. Ein Beispiel für ein solches Verfahren zur Wärmegewinnung aus geothermischer Energie ist aus der DE 10 2009 021 160 A1 bekannt.

Bei der Energiegewinnung unter Nutzung geothermischer Energie wird nicht auf limitierte fossile Energieresourcen zurückgegriffen, sondern die praktisch unbegrenzt vorhandene geothermische Energie aus dem Erdinneren genutzt. Geothermische Energie kann sowohl als reine Wärmegewinnung für Heizzwecke als auch zur Produktion elektrischer Energie eingesetzt werden. Eine Kombination von Wärme- und Elektrizitätsgewinnung ergibt sich, wenn die Restwärme des Wassers, das bereits zur Erzeugung von Elektrizität genutzt wurde, zu Heizzwecken verwendet wird. Nach der obertägigen Energiegewinnung wird das auf ca. 40 - 80°C abgekühlte Tiefenwasser über eine Reinjektionsbohrung dem unterirdischen Reservoir wieder zugeführt.

Während im Falle der Nutzung geothermischer Energie für Heizzwecke lediglich ein Wärmeaustausch des Tiefenwassers mit einem in ein Heizsystem einspeisbaren Wasser und/oder eine Anlage zur Verteilung des heißen Tiefenwassers zu den Endnutzern und zur Rückführung des abgekühlten Tiefenwassers notwendig sind, ist es für die Zwecke der Stromproduktion aus betrieblichen Gründen oftmals erforderlich, die Energie des heißen Tiefenwassers auf einen anderen Typ von Energieträger zu übertragen, der als dampfförmiges Niedertemperatur-Arbeitsfluid die zur Stromerzeugung verwendeten Generatoren antreiben kann.

Um unter Nutzung der geothermischen Energie aus Wasser Strom erzeugen zu können, wird eine geothermische Quelle benötigt, die Wasser mit einer Temperatur von über 100°C, in der Regel von mehr als 110°C liefert. In den meisten Teilen der Welt sind zur Erschließung von Tiefenwasser einer derartigen Temperatur mehrere tausend Meter tiefe Förderbohrungen notwendig. Diese Förderbohrungen werden in geeignete heißwasserführende geologische Formationen vorgetrieben. Das heiße Tiefenwasser steht in der Regel nicht unter einem so hohen Druck, dass es in den für die Energiegewinnung erforderlichen Mengen aus der Förderbohrung direkt an die Erdoberfläche transportiert wird.

Es ist somit erforderlich, das heiße Tiefenwasser zu den oberirdischen Anlagen zur Energiegewinnung zu pumpen. Um eine Anlage zur geothermischen Energiegewinnung wirtschaftlich betreiben zu können, werden an der Erdoberfläche große Mengen an Tiefenwasser pro Zeiteinheit benötigt. Die Förderpumpen müssen also in der Lage sein, Tiefenwasser mit hoher, möglichst konstanter Förderleistung an die Erdoberfläche zu pumpen. Insbesondere zur Stromproduktion aus heißem Tiefenwasser sind daher entsprechend starke Pumpen mit einer Motorleistung von mehreren hundert kW bis zu 2 .000 kW erforderlich. Diese Pumpen werden im Förderbohrloch in der Regel als Tauchmotorpumpen oder als Line Shaft Pumps unterhalb des Pegels des Tiefenwassers installiert. Die Einbautiefe der Tiefpumpen liegt in der Regel bis zu 1.000 m und mehr unter der Erdoberfläche.

Derartige Tauchmotorpumpen bzw. Line Shaft Pumpen gehören zu den für den erfolgreichen Betrieb einer Geothermieanlage besonderes kritischen Anlagenteilen. Für den wirtschaftlichen Betrieb einer Geothermieanlage mit der gewünschten Betriebskonstanz ist es erforderlich, dass das heiße Tiefenwasser der Anlage zur Stromproduktion in gleichbleibend großen Mengen von bis zu 200 l/s und mit möglichst gleichbleibender Temperatur über lange Zeiträume zur Verfügung steht.

Um diese Vorgaben zu erfüllen, werden teure leistungsstarke Spezialpumpen eingesetzt, die unter extremen Arbeitsbedingungen im heißen Tiefenwasser zuverlässig funktionieren müssen. Ein konstanter Langzeitbetrieb wird dabei auch dadurch erschwert, dass das geförderte Tiefenwasser in der Regel aggressive und/oder verschleißfördernde (abrasive) Bestandteile in gelöster Form (z. B. als Salze oder Gase) und in Teilchenform (Mineralien, Trüben) enthält, die Einfluss auf die Betriebsdauer der Pumpe und die Häufigkeit ihrer Abschaltung zu Wartungszwecken haben. Insbesondere beim Fördern von heißen (> 100°C), vorwiegend Na-Ca-hydogenkarbonatischen-Cl Thermalwässern aus Tiefbohrungen bis zu 5.000 m Tiefe können Ablagerungen verschiedener Mineralspezies in Anlageneinrichtungen und insbesondere in den Tiefpumpen erfolgen.

Die Tauchmotorpumpen müssen zur Wartung aus großer Tiefe aus dem Bohrloch an die Erdoberfläche geholt werden. Um die Unterbrechung des Betriebs der Geothermieanlage und die damit verbundenen Einnahmenverluste möglichst gering zu halten, ist für die Dauer der Wartungsarbeiten die Installation einer gemieteten oder vorzuhaltenden Ersatzpumpe denkbar. Der Aus- und Einbau der Pumpen ist jedoch sehr aufwändig. Zudem handelt es sich bei den Pumpen um teure, nur in sehr geringen Stückzahlen existierende Aggregate. Die hohen Anschaffungskosten und die außerordentlich zeit- und kostenaufwändige Wartung der Tauchmotorpumpen belasten die Wirtschaftlichkeit der Gesamtanlage erheblich.

Zur Verlängerung der Lebensdauer und Verminderung der Störanfällligkeit von Tauchmotorpumpen ist es vor allen Dingen erforderlich, das Ausmaß von Scalings wie beispielsweise Kalkablagerungen in den einzelnen Komponenten der Tauchpumpen zu verringern. In diesem Zusammenhang beschreibt die US 5,353,869 A ein Verfahren sowie ein System zur Förderung von Thermalwasser, bei dem zur Vermeidung von Schäden ein inertes Kühlmedium wie z.B. Wasser in den Bereich eingebracht wird, in dem das Thermalwasser mittels einer Förderleitung entnommen wird.

Aus der US 4,492,083 A ist eine Anlage zur Energiegewinnung aus salzhaltigem Thermalwasser bekannt, wobei die Salzkonzentration des zu fördernden Thermalwassers durch Zumischung von Wasser mit geringem Salzgehalt reduziert wird.

In der JP 60235699 A wird ein Verfahren beschrieben, bei welchem durch Zugabe von Additiven, insbesondere Zeolithen, der Kalkgehalt von Thermalwasser reduziert wird.

Die US 2008/0073058 A1 offenbart ein Verfahren und eine Anlage zur Energiegewinnung aus geothermischer Energie, bei dem das heiße Formationsfluid mit Hilfe einer Förderpumpe durch eine thermisch isolierte Rohrleitung aus einer Förderbohrung gefördert wird. Das heiße Formationsfluid wird obertägig durch einen Wärmetauscher geleitet, kühlt sich dabei ab und wird dann durch eine Rückführrohrleitung in die Förderbohrung rückgeführt, wo es sich mit dem heißen Formationsfluid mischt. Ähnlich aufgebaute Anlagen sind in der KR 101 150 596 B1 und der WO 2014/122334 A1 beschrieben.

Ein Verfahren und eine Anlage zur Wärmegewinnung aus geothermischer Energie ist in der EP 2 253 799 A2 beschrieben. Dabei wird Wasser in eine Salzlagerstätte eingebracht, wo es sich durch die vorhandene Erdwärme erhitzt, dann in Form einer aufgeheizten Sole abgepumpt und obertägig durch einen Wärmetauscher geleitet. Die abgekühlte Sole wird obertägig zumindest zum Teil durch Frischwasser ersetzt. Die US 5 965 031 A1 offenbart ein Verfahren zur Verringerung der Kalkablarungen in einer geothermischen Anlage durch chemische Behandlung. Trotz dieser aus dem Stand der Technik bekannten Ansätze zur Verringerung von Kalkablagerungen in Tauchmotorpumpen von Geothermalanlagen bleibt es eine vordringliche Aufgabe die Lebensdauer von Tauchmotorpumpen zu verlängern und deren Störanfällligkeit zu vermindern.

### Darstellung der Erfindung

Hier setzt die Erfindung an. Es soll ein Verfahren und eine Anlage zur Energiegewinnung aus geothermischer Energie zur Verfügung gestellt werden, das bzw. die die Lebensdauer von Tauchmotorpumpen verlängert und deren Störanfällligkeit vermindert. Diese Aufgabe wird erfindungsgemäß durch das Verfahren gemäß unabhängigem Anspruch 1 und die Anlage gemäß unabhängigem Anspruch 8 gelöst. Weitere vorteilhafte Aspekte, Details und Ausgestaltungen der Erfindung ergeben sich aus den abhängigen Ansprüchen, der Beschreibung sowie den Zeichnungen.

Die vorliegende Erfindung stellt ein Verfahren zur Verringerung des Scalings bei der Energiegewinnung aus geothermischer Energie zur Verfügung, wobei das Verfahren die folgenden Schritte umfasst:
- Fördern eines heißen Formationsfluids aus einer Förderbohrung durch eine Förderrohrleitung unter Verwendung einer Förderpumpe,
- Durchleiten des heißen Formationsfluids durch eine obertägige Einrichtung zur Energiegewinnung unter Abkühlung des heißen Formationsfluids und Bildung eines abgekühlten Formationsfluids,
- Rückführung eines Teils von 2% bis 12% der Gesamtmenge des abgekühlten Formationsfluids in die Förderbohrung durch eine zumindest abschnittsweise thermisch isolierte Rückführrohrleitung,
- Mischen des rückgeführten Teils des abgekühlten Formationsfluids mit dem zu fördernden, heißen Formationsfluid innerhalb der Förderbohrung,
- Reinjektion des übrigen abgekühlten Formationsfluids in eine von der Förderbohrung beabstandete Injektionsbohrung.

Mit dem Begriff "Formationsfluid" wird im Rahmen der vorliegenden Anmeldung jede Art von Tiefenwasser mit beliebig unterschiedlicher Zusammensetzung bezeichnet. Die als "Formationsfluid" bezeichneten Arten von Tiefenwasser enthalten in der Regel Anteile an Calciumhydrogencarbonat. Von dem Begriff "Formationsfluid" sind insbesondere auch Fluide umfasst wie sie bei der Ölförderung auftreten.

Wie aus dem Stand der Technik bekannt wird auch bei dem erfindungsgemäßen Verfahren das geförderte, heiße Formationsfluid einer obertägig installierten Einrichtung zur Energiegewinnung zugeführt. Dort wird dem heißen Formationsfluid Wärmeenergie entzogen und auf ein beliebiges Arbeitsfluid übertragen, welches nachfolgend zur Gewinnung von elektrischer Energie oder zu Heizzwecken eingesetzt werden kann. Durch den Entzug von Wärmeenergie kühlt das Formationsfluid ab. Erfindungsgemäß wird dem abgekühlten Formationsfluid mit Hilfe von obertägigen Rohrleitungen ein Teilstrom entnommen und über den sogenannten Bohrlochkopf (wellhead) durch eine zumindest abschnittsweise thermisch isolierte Rückführrohrleitung wieder zurück in die Förderbohrung geführt. Durch die Zufuhr des abgekühlten Formationsfluids kommt es zu einer Absenkung der Temperatur des zur Entnahme anstehenden Formationsfluids.

Erfindungsgemäß erfolgt das Mischen des rückgeführten Teils des abgekühlten Formationsfluids mit dem zu fördernden, heißen Formationsfluid innerhalb der Förderbohrung. In der Regel erfolgt diese Mischen unterhalb oder seitlich neben der Förderpumpe. Für den Fachmann ist klar, dass das Mischen nicht in einem Bereich oberhalb der Förderpumpe erfolgen sollte, in dem nur eine reduzierte Wirkung der Zuführung des rückgeführten Teils des abgekühlten Formationsfluids mehr festzustellen ist, da in diesem Fall fast ausschließlich heißes Formationsfluid durch die Förderpumpe gefördert werden würde. In dem besonderen Fall der Zuführung des rückgeführten, abgekühlten Formationsfluids oberhalb der Förderpumpe (besondere Pumpenbauform, beengte Platzverhältnisse) sollte das Mischen des rückgeführten Teils des abgekühlten Formationsfluids mit dem zu fördernden, heißen Formationsfluid innerhalb der Förderbohrung in einem vertikalen Abstand von maximal 50 m oberhalb der Förderpumpe, bevorzugt maximal 25 m, besonders bevorzugt maximal 10 m oberhalb der Förderpumpe erfolgen.

Das erfindungsgemäße Mischen des rückgeführten Teils des abgekühlten Formationsfluids mit dem zu fördernden, heißen Formationsfluid innerhalb der Förderbohrung erfolgt dabei bevorzugt unterhalb oder oder oberhalb des Ortes einer möglichen Entgasung des Formationsfluids.

Durch diese Temperaturabsenkung können verschiedene Arten von Scalings in den Förderleitungen, der Förderpumpe, der obertägigen Einrichtung zur Energiegewinnung usw. verringert werden. Unter "Scaling" wird allgemein das Auskristallisieren von schwerlöslichen Salzen wie insbesondere Calciumhydrogencarbonat, Calciumcarbonat, Calciumsulfat, Silikaten, Sulfiden und Magnesiumhydroxid verstanden.

Für das Gleichgewicht zwischen dem in Wasser immer vorhandenen gut löslichen Calciumhydrogencarbonat und dem unlöslichen Calciumcarbonat lautet die Reaktionsgleichung

Ca²⁺ + 2 HCO₃⁻ ⇄ CaCO₃ ↓ + CO₂ ↑ + H₂O

Bei dieser hauptsächlich auftretenden und insbesondere schädlichen Ablagerung von Calciumcarbonat handelt es sich um eine exotherme Reaktion. Mit steigender Temperatur oder/und fallendem Druck nimmt in solchen Fällen die Löslichkeitskonstante ab, was wiederum dazu führt, dass mit steigender Temperatur und/oder fallendem Druck steigende Mengen an Kalk abgelagert werden. Diesen Effekt nutzt das erfindungsgemäße Verfahren aus, da es aufgrund der durch die Rückführung eines Teils des abgekühlten Formationsfluids in die Förderbohrung zu einer Absenkung der Temperatur des geförderten Formationsfluids kommt, wodurch sich das Ausmaß der Entstehung von Scalings, insbesondere karbonatischen Ablagerungen in der Förderpumpe und anderen Anlagenteilen verringert.

Unter dem Begriff "Förderpumpe" wird im Rahmen der vorliegenden Anmeldung jede Art von für geothermische Anlagen geeigneten Pumpen verstanden, insbesondere also Tiefpumpen, Tauchmotorpumpen, Electrical submersible pumps (ESP) und Line Shaft pumps (LSP).

Unter dem Ausdruck "Ansaugbereich der Förderpumpe" wird im Rahmen der vorliegenden Anmeldung der Eintrittsquerschnitt am Pumpeneintritt verstanden, der in Abhängigkeit vom Pumpentyp und Bauweise der Pumpe am unteren Ende, an einer Seite oder in Ausnahmefällen auch am oberen Ende der Förderpumpe angeordnet sein kann. Dem Fachmann ist eine genaue Festlegung des Ansaugbereichs der Förderpumpe klar. Üblicherweise liegt der Ansaugbereich von sogenannten ESP-Systemen am unteren Ende der Pumpensektion und oberhalb der Motor-/Sealsektion. Im Falle von LSP-Systemen liegt der Ansaugbereich auf der der Erdoberfläche abgewandten Seite, also am unteren Ende der Förderpumpe.

Einen weiteren, besonderen Vorteil des erfindungsgemäßen Verfahrens stellt die Tatsache dar, dass ausschließlich zuvor gefördertes Formationsfluid rückgeführt wird. Eine Verunreinigung des Formationsfluids durch irgendwelche Zusatzstoffe wird somit vermieden. Ökologisch und in Folge auch ökonomisch nachteilige Auswirkungen durch das in den Aquifier zurückgeführte Fluid können dadurch ausgeschlossen werden. Zudem werden die Notwendigkeit der Bereitstellung eines gesonderten Kühlfluids und die damit verbundenen Kosten vermieden.

Neben der Verringerung von Ablagerungen führt das erfindungsgemäße Verfahren dazu, dass die einzelnen Komponenten der geothermischen Anlage und insbesondere der Förderpumpe mit einem Medium geringerer Temperatur beaufschlagt werden, was wiederum zu einer Verminderung von Verschleißerscheinungen und zu einer Verlängerung der Lebensdauer der einzelnen Komponenten führt. Darüber hinaus können durch die Temperaturabsenkung mögliche freie Gasanteile (u.a. CO₂) im Formationsfluid vor Eintritt in die Förderpumpe reduziert oder die Bildung von Gasanteilen in der Förderpumpe reduziert oder vermieden werden.

Das erfindungsgemäße Verfahren kann problemlos in bestehende Anlagen mit Standard ESP-Systemen integriert werden. Die traditionelle Einbaulage der ESP-Systeme (Motorsegment unten, Seal in der Mitte, Pumpensegment oben) bleibt erhalten, d.h. aus dem erfindungsgemäßen Verfahren ergeben sich keine spezifischen Konfigurationsanforderungen an das ESP-System. Der Betrieb und insbesondere auch das Anfahren des ESP-Systems kann "mit" und "ohne" Rückführung des abgekühlten Formationsfluids erfolgen. Eine geothermische Anlage mit einer Rückführrohrleitung kann also auch konventionell ohne Rückführung des abgekülten Formationsfluids betrieben werden.

Unabhängig davon, ob abgekühltes Formationsfluid in das Förderbohrloch rückgeführt wird oder nicht, steht die thermische Leistung des geförderten Formationsfluids immer vollständig für die obertägige thermische Nutzung (Verstromung, Wärmeauskopplung) zur Verfügung. Aufgrund der durch die Rückführung eines Teils des abgekühlten Formationsfluids in die Förderbohrung verursachten Absenkung der Temperatur des geförderten Formationsfluids kommt es nur zu einer unwesentlichen Verringerung des elektrischen Wirkungsgrades im Falle einer Verstromung des geförderten Formationsfluids. Dieser unwesentliche Nachteil wird durch die längeren Einsatzzeiten, die geringere Störanfälligkeit und den geringeren Wartungsaufwand für die einzelnen Anlagenkomponenten und insbesondere die Förderpumpe bei weitem überwogen.

Tiefbohrungen und insbesondere Förderbohrungen sind aufgrund ihrer Bauweisen bis zum eigentlichen Reservoir an Formationsfluid mit sogenannten Casings ausgekleidet. Durch solche Casings wird der Eintritt von Fremdfluid verhindert. Besonders bevorzugt erfolgt das Mischen des rückgeführten Teils des abgekühlten Formationsfluids mit dem zu fördernden, heißen Formationsfluid innerhalb des Casings.

Vorzugsweise weist das heiße Formationsfluid eine Temperatur von wenigstens 100°C, besonders bevorzugt von wenigstens 110°C auf. Die genannten Temperaturen ermöglichen eine effektive Energiegewinnung unter Abkühlung des heißen Formationsfluids.

Nach der obertägigen thermischen Nutzung des Formationsfluides erfolgt eine Reinjektion des abgekühlten Formationsfluids in eine von der Förderbohrung beabstandete Reinjektionsbohrung. Neben dem Teil des abgekühlten Formationsfluids, der durch eine Rückführrohrleitung in die Förderbohrung rückgeführt wird, fällt ein weiterer, größerer Teil an abgekühltem Formationsfluid an, welcher vorteilhafterweise in eine von der Förderbohrung beabstandete Injektionsbohrung gefördert wird.

Bevorzugt weist das heiße Formationsfluid einen Anteil an gelöstem Kohlendioxid von mindestens 50 ppmV oder einen Anteil an Hydrogencarbonat von mindestens 50 mg/l bzw. mehr als 500 mg/l auf. Derart hohe Hydrogencarbonat-Anteile liegen insbesondere in den vorwiegend Na-Ca-hydogenkarbonatischen-Cl Wässern insbesondere aus dem oberen Jura des bayrischen Molassebeckens vor. Die dort eingesetzten Tiefpumpen sind einem besonders hohen Verschleiß auch aufgrund von Ablagerungen ausgesetzt, weshalb die Verhinderung solcher Ablagerungen durch Rückführung eines Teils des abgekühlten Formationsfluids in die Förderbohrung mit einer besonders ausgeprägten Verminderung der Störanfälligkeit verbunden ist.

Bevorzugt erfolgt vor Rückführung des abgekühlten Formationsfluids in die Förderbohrung eine Zugabe von CO₂ zu dem zur Rückführung vorgesehenen, abgekühlten Formationsfluid. Wie aus der oben angegebenen Reaktionsgleichung für das Gleichgewicht zwischen Calciumhydrogencarbonat und dem unlöslichen Calciumcarbonat hervorgeht, wird das Gleichgewicht durch Zugabe von Kohlendioxid auf die Seite des Calciumhydrogencarbonats gedrängt, wodurch es zu einer weiteren Verringerung von Ablagerungen in der Tauchpumpe und den anderen Komponenten der Geothermieanlage kommt.

Die obertägige CO₂-Zugabe (Menge, Druckbedingungen und Einbringungsart) in das abgekühlte Formationsfluid erfolgt mit Hilfe eines Mischers und einer CO₂-Mengenbegrenzung derart, dass eine vollständige Auflösung des beigemischten CO₂ bereits obertägig im abgekühlten Formationsfluid erreicht wird. Die Menge an zugegebenem CO₂ in das abgekühlte Formationsfluid beträgt je nach Formationsfluid und geplanter Scalingminderung von 0,001 0g_{CO2} / I_{Formationsfluid} bis zu 4 g_{CO2} / I_{Formationsfluid}, bevorzugt von 0,01 g_{CO2} / I_{Formationsfluid} bis zu 2 g_{CO2} / I_{Formationsfluid}.

Die max. mögliche Zugabemenge ist von den physikalisch-chemischen Eigenschaften des jeweiligen Formationsfluides abhängig und wird spezifisch für das abgekühlte Formationsfluid wie für die zu fördernde Formationsfluidmischung mit einer detaillierten hydrochemischen Modellierung unter Berücksichtigung der jeweiligen thermodynamischen Zustandsbedingungen vorab bestimmt. Hierdurch wird eine mögliche Überdosierung und ungewünschte Gasbildung sicher vermieden.

Erfindungsgemäß wird ein Anteil von 2% bis 12%, bevorzugt 3% bis 10%, der Gesamtmenge des abgekühlten Formationsfluids in die Förderbohrung rückgeführt. Untersuchungen haben gezeigt, dass bereits durch eine dauerhafte relativ geringe Abkühlung des zur Förderung anstehenden, heißen Formationsfluids um nur 2 K bis 10 K das Ausmaß an Ablagerungen in den einzelnen Bestandteilen der Anlage und insbesondere in der Förderpumpe deutlich verringert wird.

Die gewünschte Abkühlung des Formationsfluids kann durch verschiedene Maßnahmen geregelt werden. Eine direkte Auswirkung auf die Mischtemperatur hat die Temperatur des rückgeführten Formationsfluids, wobei eine geringere Temperatur des rückgeführten Formationsfluids zu einer niedrigeren Temperatur des Gemisches aus zur Förderung anstehendem Formationsfluid und rückgeführtem Formationsfluid führt. Analog kann die Mischtemperatur durch die Menge an rückgeführtem Formationsfluid in einfacher Weise geregelt werden. Die dazu erforderliche Regelung des Volumenstroms an rückgeführtem Formationsfluid erfolgt mit Hilfe entsprechender obertägiger Durchflussregler (beispielsweise Durchflussmesser, Förderpumpe soweit erforderlich, Regelventil) . Der obertägige Betriebsdruckbereich für das rückgeführte Formationsfluid liegt je nach Erfordernissen zwischen Atmosphärendruck bis zu mehr als 25 bar. Daneben kann mit Hilfe einer in Abhängigkeit von der Bohrungshydraulik, der geplanten Fördermenge und des geforderten obertägigen Betriebsdruckes am Austritt eines optional vorgesehenen untertägigen Mischers in Durchmesser und Geometrie definierten Austrittsbohrung ein Bereich für die Durchflussmenge an Mischung aus rückgeführtem Formationsfluid und zur Förderung anstehendem Formationsfluid eingegrenzt werden.

Die vorliegende Erfindung umfasst auch eine Anlage zur Verringerung des Scalings bei der
- eine in einer Förderbohrung angeordnete Förderpumpe zum Fördern eines heißen Formationsfluids,
- eine obertägige Einrichtung zur Energiegewinnung unter Abkühlung des heißen Formationsfluids und Bildung eines abgekühlten Formationsfluids,
- eine die Förderpumpe mit der Einrichtung zur Energiegewinnung verbindende Förderrohrleitung,
- eine zumindest abschnittsweise thermisch isolierte Rückführrohrleitung zur Rückführung eines Teils von 2% bis 12% der Gesamtmenge des abgekühlten Formationsfluids in die Förderbohrung, wobei die Rückführrohrleitung eine innerhalb der Förderbohrung angeordnete Austrittsöffnung aufweist,
- eine von der Förderbohrung beabstandete Reinjektionsbohrung für die Reinjektion des übrigen abgekühlten Formationsfluids.

Die mit der erfindungsgemäßen Anlage zur Energiegewinnung aus geothermischer Energie verbundenen Vorteile wurden im Zusammenhang mit dem erfindungsgemäßen Verfahren bereits diskutiert. Die dort angegebenen Vorteile und Besonderheiten treffen auf die Anlage zur Energiegewinnung aus geothermischer Energie in analoger Weise zu.

Bevorzugt ist das untere Ende der Rückführrohrleitung mit einem Mischer verbunden, wobei die Austrittsöffnung des Mischers die Austrittsöffnung der Rückführrohrleitung ersetzt. Durch den Einsatz eines Mischers wird eine besonders gute und homogene Vermischung des rückgeführten Stroms an abgekühltem Formationsfluid mit dem zur Förderung anstehenden heißen Formationsfluid erreicht. Der Förderpumpe wird daher Formationsfluid mit relativ konstanter Temperatur zugeführt, was zu einer weiteren Verringerung der Bildung von unerwünschten Ablagerungen führt.

Die Rückführrohrleitung zur Rückführung eines Teils des abgekühlten Formationsfluids in die Förderbohrung kann zumindest abschnittsweise innerhalb der Förderrohrleitung angeordnet sein (sogenannte dual concentric Konfiguration) oder sie kann zumindest abschnittsweise im Wesentlichen parallel zur Förderrohrleitung und außerhalb der Förderrohrleitung verlaufen. Die gewählte Anordnung der Rückführrohrleitung hängt von den Platzverhältnissen im Bohrloch und im Bereich des obertägigen Endes des Förderbohrlochs (wellhead) ab.

Die Tiefbohrungen sind aufgrund ihrer Bauweisen bis zum eigentlichen Reservoir an Formationsfluid mit sogenannten Casings ausgekleidet. Durch solche Casings wird der Eintritt von Fremdfluid verhindert. Im Bereich von der Erdoberfläche bis ca 1.000 m Tiefe weisen die Casings je nach Bauausführung in der Regel einen Rohraußendurchmesser von 33,97 cm (13.3/8") bis zu 50,8 cm (20") auf. In größerer Tiefe wird in der Regel ein Verrohrrungsdurchmesser von 33,97 cm (13.3/8") oder weniger gewählt. Bevorzugt ist die Austrittsöffnung der Rückführrohrleitung innerhalb des Casings angeordnet.

Gemäß einer bevorzugten Ausführungsformel der vorliegenden Erfindung wird eine zumindest abschnittsweise thermisch hoch isolierte Rückführrohrleitung eingesetzt. Besonders bevorzugt wird eine zumindest abschnittsweise durch ein Vakuum isolierte Rückführrohrleitung verwendet. Die Rückführrohrleitung kann selbstverständlich über ihre gesamte Länge thermisch isoliert ausgebildet sein.

Bevorzugt weist die Anlage eine Kohlendioxidzuführrohrleitung auf, wobei durch die Kohlendioxidzuführrohrleitung vor Rückführung des abgekühlten Formationsfluids in die Förderbohrung eine Zugabe von CO₂ zu dem zur Rückführung vorgesehenen, abgekühlten Formationsfluid erfolgt. Wie aus der oben angegebenen Reaktionsgleichung für das Gleichgewicht zwischen Calciumhydrogencarbonat und dem unlöslichen Calciumcarbonat hervorgeht, wird das Gleichgewicht durch Zugabe von Kohlendioxid auf die Seite des Calciumhydrogencarbonats gedrängt, wodurch es zu einer weiteren Verringerung von Ablagerungen in der Tauchpumpe und den anderen Komponenten der Geothermieanlage kommt.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung.

### Wege zur Ausführung der Erfindung

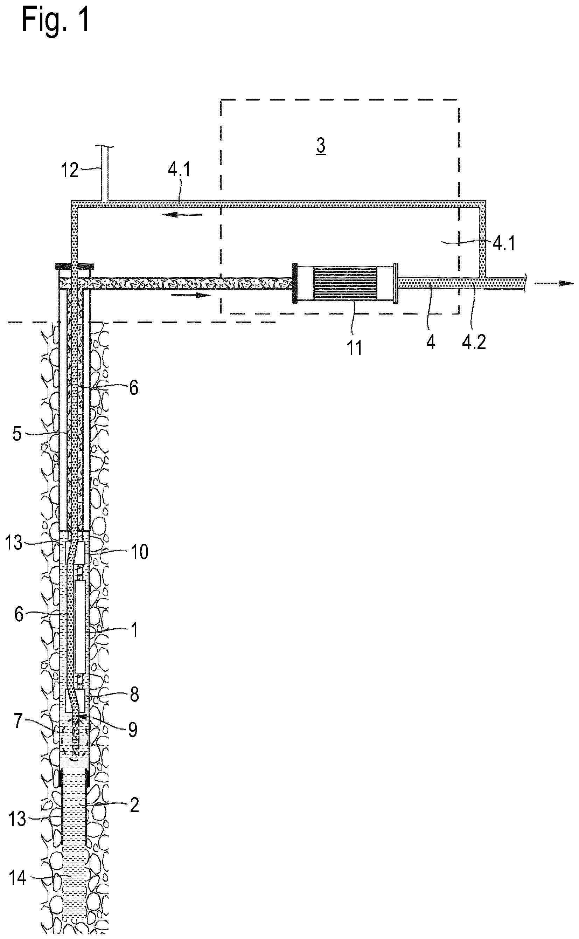

Die Erfindung soll nachfolgend anhand von Ausführungsbeispielen im Zusammenhang mit der Figur näher erläutert werden. Die Figur 1 zeigt eine schematische Darstellung einer Ausführungsform einer Anlage zur Energiegewinnung aus geothermischer Energie gemäß der vorliegenden Erfindung.

In der mit einem Casing 13 ausgestatteten Förderbohrung ist eine Förderpumpe 1 zum Fördern des heißen Formationsfluids 2 angeordnet. Das heiße Formationsfluid 2 wird von der Förderpumpe 1 durch die Förderrohrleitung 5 zu der obertägig installierten Einrichtung zur Energiegewinnung 3 gepumpt. Dort wird dem heißen Formationsfluid 2 in einem Wärmetauscher 11 Wärmeenergie entzogen und auf ein Arbeitsfluid (nicht dargestellt) übertragen, welches nachfolgend zur Gewinnung von elektrischer Energie eingesetzt wird. Durch den Entzug von Wärmeenergie kühlt das Formationsfluid ab. Der Strom des abgekühlten Formationsfluids ist mit dem Bezugszeichen 4 gekennzeichnet. Der größere Teil 4.2 des abgekühlten Formationsfluids wird zu einer von der Förderbohrung beabstandeten Reinjektionsbohrung geleitet und dort in die das Formationsfluid führenden Gesteinsschichten rückinjeziert. Der kleinere Teil 4.1 des abgekühlten Formationsfluids wird durch eine thermisch isolierte Rückführrohrleitung 6 an den Endabschnitt der Förderleitung 5 zurückgeführt.

Mit dem Bezugszeichen 12 ist eine Kohlendioxidzuführrohrleitung bezeichnet, durch die vor Rückführung des abgekühlten Formationsfluids in die Förderbohrung eine Zugabe von CO₂ zu dem zur Rückführung vorgesehenen, abgekühlten Formationsfluid erfolgt.

Typische Außendurchmesser der Förderleitung 5 sind 19,37 cm (7 5/8"), 21,91 cm (8 5/8"), 24,45 cm (9 5/8") oder 27,31 cm (10 3/4"). Typische Außendurchmesser einer vakuumisolierten Rückführrohrleitung 6 sind 7,30 cm (2 7/8") oder 8,89 cm (3 1/2").

Mit dem Bezugszeichen 10 sind Rohradapter gekennzeichnet, die für einen dichten Übergang von Rohren verschiedener Durchmesser und Anordnungen der Rohrleitungen (parallel, dual concentric) sorgen.

Im gezeigten Ausführungsbeispiel ist die thermisch isolierte Rückführrohrleitung 6 im Bereich oberhalb des Rohradapters 10 innerhalb der Förderleitung 5 angeordnet (dual concentric Konfiguration). Im Bereich unter des Rohradapters 10 verläuft die Rückführrohrleitung 6 als Bypassleitung parallel zur Förderpumpe 1. Die Rückführrohrleitung 6 kann in dem Bereich, in dem sie parallel zur Förderpumpe 1 verläuft einen geringeren Durchmesser aufweisen als im Berich innerhalb der Förderleitung 5.

In dem gezeigten Ausführungsbeispiel weist die Rückführrohrleitung 6 eine innerhalb der Förderbohrung im Ansaugbereich 7 der Förderpumpe 1 angeordnete Austrittsöffnung auf. Allgemein kann die Austrittsöffnung in einem beliebigen Bereich der Förderbohrung, beispielsweise auch in dem tiefsten, ohne Casing ausgestatteten Bereich 14 der Förderbohrung. Das aus der Austrittsöffnung austretende, abgekühlte Formationsfluid mischt sich mit dem zur Entnahme anstehenden heißen Formationsfluid und senkt dessen Temperatur ab. In Folge der Temperaturabsenkung kommt es zu einer Verringerung der Ausbildung von Ablagerungen in den einzelnen Anlagenteilen und insbesondere in der Förderpumpe 1, was wiederum zu einer längeren Lebensdauer und einem verringerten Wartungsaufwand führt.

### Bezugszeichenliste

- 1: Förderpumpe
- 2: Formationsfluid
- 3: obertägige Einrichtung zur Energiegewinnung
- 4: abgekühltes Formationsfluid
- 4.1: zur Rückführung in die Förderbohrung vorgesehenes, abgekühltes Formationsfluid
- 4.2: zur Reinjektion in das unterirdische Reservoir vorgesehenes, abgekühltes Formationsfluid
- 5: Förderrohrleitung
- 6: Rückführrohrleitung
- 7: Ansaugbereich der Förderpumpe
- 8: Mischer
- 9: Austrittsöffnung des Mischers
- 10: Rohradapter
- 11: Wärmetauscher
- 12: Kohlendioxidzuführrohrleitung
- 13: Casing
- 14: Förderbohrungsbereich ohne Casing

## Patentansprüche

1. Verfahren zur Verringerung des Scalings bei der Energiegewinnung aus geothermischer Energie umfassend die Schritte
- Fördern eines heißen Formationsfluids (2) aus einer Förderbohrung durch eine Förderrohrleitung (5) unter Verwendung einer Förderpumpe (1),
- Durchleiten des heißen Formationsfluids (2) durch eine obertägige Einrichtung zur Energiegewinnung (3) unter Abkühlung des heißen Formationsfluids (2) und Bildung eines abgekühlten Formationsfluids (4),
- Rückführung eines Teils (4.1) von 2% bis 12% der Gesamtmenge des abgekühlten Formationsfluids (4) in die Förderbohrung durch eine zumindest abschnittsweise thermisch isolierte Rückführrohrleitung (6),
- Mischen des rückgeführten Teils (4.1) des abgekühlten Formationsfluids (4) mit dem zu fördernden, heißen Formationsfluid (2) innerhalb der Förderbohrung,
- Reinjektion des übrigen abgekühlten Formationsfluids (4) in eine von der Förderbohrung beabstandete Injektionsbohrung.

2. Verfahren nach Anspruch 1, **dadurch gekennzeichnet, dass** das heiße Formationsfluid (2) einen Anteil an Hydrogencarbonat von mehr als 50 mg/l oder einen Anteil an gelöstem Kohlendioxid von mehr als 50 ppmV aufweist.

3. Verfahren nach einem der Ansprüche 1 oder 2, **dadurch gekennzeichnet, dass** vor Rückführung des abgekühlten Formationsfluids (4.1) in die Förderbohrung eine Zugabe von CO₂ zu dem zur Rückführung vorgesehenen, abgekühlten Formationsfluid (4.1) erfolgt.

4. Verfahren nach Anspruch 3, **dadurch gekennzeichnet, dass** eine Menge von 0,001 g_{CO2} / I_{Formationsfluid} bis zu 4 g_{CO2} / I_{Formationsfluid}, bevorzugt von 0,01 g_{CO2} / I_{Formationsfluid} bis zu 2 g_{CO2} / I_{Formationsfluid} zu dem zur Rückführung vorgesehenen, abgekühlten Formationsfluid (4.1) zugegeben wird.

5. Verfahren nach einem der Ansprüche 1 bis 4, **dadurch gekennzeichnet, dass** ein Anteil (4.1) von 3% bis 10% der Gesamtmenge an abgekühlten Formationsfluid (4) in die Förderbohrung rückgeführt wird.

6. Verfahren nach einem der Ansprüche 1 bis 5, **dadurch gekennzeichnet, dass** das Mischen des rückgeführten Teils (4.1) des abgekühlten Formationsfluids (4) mit dem zu fördernden, heißen Formationsfluid (2) innerhalb des Casings der Förderbohrung erfolgt.

7. Verfahren nach einem der Ansprüche 1 bis 6, **dadurch gekennzeichnet, dass** das Mischen des rückgeführten Teils (4.1) des abgekühlten Formationsfluids (4) mit dem zu fördernden, heißen Formationsfluid (2) innerhalb des Casings der Förderbohrung unterhalb der Förderpumpe (1) erfolgt.

8. Anlage zur Verringerung des Scalings bei der Energiegewinnung aus geothermischer Energie aufweisend
- eine in einer Förderbohrung angeordnete Förderpumpe (1) zum Fördern eines heißen Formationsfluids (2),
- eine obertägige Einrichtung zur Energiegewinnung (3) unter Abkühlung des heißen Formationsfluids (2) und Bildung eines abgekühlten Formationsfluids (4),
- eine die Förderpumpe (1) mit der Einrichtung zur Energiegewinnung (3) verbindende Förderrohrleitung (5),
- eine zumindest abschnittsweise thermisch isolierte Rückführrohrleitung (6) zur Rückführung eines Teils (4.1) von 2% bis 12% der Gesamtmenge des abgekühlten Formationsfluids (4) in die Förderbohrung, wobei die Rückführrohrleitung (6) eine innerhalb der Förderbohrung angeordnete Austrittsöffnung aufweist,
- eine von der Förderbohrung beabstandete Reinjektionsbohrung für die Reinjektion des übrigen abgekühlten Formationsfluids (4).

9. Anlage nach Anspruch 8, **dadurch gekennzeichnet, dass** die Austrittsöffnung der Rückführrohrleitung (6) innerhalb des Casings der Förderbohrung angeordnet ist.

10. Anlage nach Anspruch 9, **dadurch gekennzeichnet, dass** die Austrittsöffnung der Rückführrohrleitung (6) innerhalb des Casings der Förderbohrung unterhalb der Förderpumpe angeordnet ist.

11. Anlage nach einem der Ansprüche 8 bis 10, **dadurch gekennzeichnet, dass** das untere Ende der Rückführrohrleitung (6) mit einem Mischer (8) verbunden ist, wobei die Austrittsöffnung (9) des Mischers (8) die Austrittsöffnung der Rückführrohrleitung (6) ersetzt.

12. Anlage nach einem der Ansprüche 8 bis 11, **dadurch gekennzeichnet, dass** zumindest ein Teil der Rückführrohrleitung (6) innerhalb der Förderrohrleitung (5) angeordnet ist.

13. Anlage nach einem der Ansprüche 8 bis 12, **dadurch gekennzeichnet, dass** die Rückführrohrleitung (6) zumindest abschnittsweise im Wesentlichen parallel zur Förderrohrleitung (5) und außerhalb der Förderrohrleitung (5) verläuft.

14. Anlage nach einem der Ansprüche 8 bis 13, **dadurch gekennzeichnet, dass** es sich um eine zumindest abschnittsweise thermisch hoch isolierte Rückführrohrleitung (6), bevorzugt um eine zumindest abschnittsweise vakuumisolierte Rückführrohrleitung handelt.

15. Anlage nach einem der Ansprüche 8 bis 14, **dadurch gekennzeichnet, dass** eine Kohlendioxidzuführrohrleitung (12) vorgesehen ist, wobei durch die Kohlendioxidzuführrohrleitung (12) vor Rückführung des abgekühlten Formationsfluids (4.1) in die Förderbohrung eine Zugabe von CO₂ zu dem zur Rückführung vorgesehenen, abgekühlten Formationsfluid (4.1) erfolgt.

## Claims

1. A method for reducing scaling when generating power from geothermal energy, comprising the steps of:
- delivering a hot formation fluid (2) from a production well through a conveying pipeline (5) using a delivery pump (1),
- feeding the hot formation fluid (2) through an above-ground facility for generating power (3) while cooling of the hot formation fluid (2) and forming a cooled formation fluid (4),
- recycling a portion (4.1) of 2% to 12% of the total quantity of the cooled formation fluid (4) to the production well through a recycle pipeline (6) which is thermally insulated at least in sections,
- mixing the recycled portion (4.1) of the cooled formation fluid (4) with the hot formation fluid (2) to be delivered in the interior of the production well,
- re-injecting the remaining cooled formation fluid (4) into an injection well which is separated from the production well.

2. The method according to claim 1, **characterized in that** the hot formation fluid (2) comprises a proportion of hydrogen carbonate of more than 50 mg/l or a proportion of dissolved carbon dioxide of more than 50 ppmV.

3. The method according to claim 1 or 2, **characterized in that** before recycling the cooled formation fluid (4.1) to the production well, CO₂ is added to the cooled formation fluid (4.1) which is to be recycled.

4. The method according to claim 3, **characterized in that** a quantity of 0.001 9_{CO2}/I_{formation fluid} to 4 9_{CO2}/I_{formation fluid}, preferably 0.01 9_{CO2}/I_{formation fluid} to 2 9_{CO2}/I_{formation fluid}, is added to the cooled formation fluid (4.1) which is to be recycled.

5. The method according to one of claims 1 to 4, **characterized in that** a proportion (4.1) of 3% to 10% of the total quantity of cooled formation fluid (4) is recycled to the production well.

6. The method according to one of claims 1 to 5, **characterized in that** mixing of the recycled portion (4.1) of the cooled formation fluid (4) with the hot formation fluid (2) to be dellivered is carried out in the interior of the casing of the production well.

7. The method according to one of claims 1 to 6, **characterized in that** mixing of the recycled portion (4.1) of the cooled formation fluid (4) with the hot formation fluid (2) to be delivered is carried out in the interior of the casing of the production well underneath the delivery pump (1).

8. A plant for reducing scaling during power generation from geothermal energy, comprising:
- a delivery pump (1) disposed in a production well for delivering a hot formation fluid (2),
- an above-ground facility (3) for generating power while cooling of the hot formation fluid (2) and forming a cooled formation fluid (4),
- a conveying pipeline (5) connecting the delivery pump (1) with the power generation facility (3),
- a recycle pipeline (6) which is thermally insulated at least in sections for recycling a portion (4.1) of 2% to 12% of the total quantity of the cooled formation fluid (4) to the production well, wherein the recycle pipeline (6) comprises a discharge opening which is disposed in the interior of the production well,
- a re-injection well which is separated from the production well for re-injection of the remaining cooled formation fluid (4).

9. The plant according to claim 8, **characterized in that** the discharge opening of the recycle pipeline (6) is disposed in the interior of the casing of the production well.

10. The plant according to claim 9, **characterized in that** the discharge opening of the recycle pipeline (6) is disposed in the interior of the casing of the production well underneath the delivery pump.

11. The plant according to one of claims 8 to 10, **characterized in that** the lower end of the recycle pipeline (6) is connected to a mixer (8), wherein the discharge opening (9) of the mixer (8) replaces the discharge opening of the recycle pipeline (6).

12. The plant according to one of claims 8 to 11, **characterized in that** at least a portion of the recycle pipeline (6) is disposed in the interior of the conveying pipeline (5).

13. The plant according to one of claims 8 to 12, **characterized in that** the recycle pipeline (6) runs at least in sections essentially parallel to the conveying pipeline (5) and externally of the conveying pipeline (5).

14. The plant according to one of claims 8 to 13, **characterized in that** it is a recycle pipeline (6) which is highly thermally insulated at least in sections, preferably a recycle pipeline which is vacuum insulated, at least in sections.

15. The plant according to one of claims 8 to 14, **characterized in that** a carbon dioxide supply pipeline (12) is provided, wherein, prior to recycling the cooled formation fluid (4.1) to the production well, CO₂ is added via the carbon dioxide pipeline (12) to the cooled formation fluid (4.1) intended for recycling.

## Revendications

1. Procédé destiné à réduire l'entartrage lors de la récupération d'énergie à partir d'énergie géothermique, comprenant les étapes :
- du convoyage d'un fluide de formation (2) chaud à partir d'un forage de production à travers une colonne de production (5), en utilisant une pompe de refoulement (1),
- du passage du fluide de formation (2) chaud à travers un système de récupération d'énergie (3) situé hors sol, en refroidissant le fluide de formation (2) chaud et de la génération d'un fluide de formation (4) refroidi,
- du recyclage d'une partie (4.1) de 2% à 12% de la quantité totale du fluide de formation (4) refroidi dans le forage de production, à travers une colonne de recyclage (6) thermiquement isolée, au moins par endroits,
- du mélange de la partie (4.1) recyclée du fluide de formation (4) refroidi avec le fluide de formation (2) chaud qui doit être convoyé, à l'intérieur du forage de production,
- de la réinjection du fluide de formation (4) restant, dans un forage d'injection écarté du forage de production.

2. Procédé selon la revendication 1, **caractérisé en ce que** le fluide de formation (2) chaud comporte une part de carbonate d'hydrogène de plus de 50 mg/l ou une part de dioxyde de carbone dissous de plus de 50 ppmV.

3. Procédé selon l'une quelconque des revendications 1 ou 2, **caractérisé en ce qu'**avant le recyclage du fluide de formation (4.1) refroidi dans le forage de production, il s'effectue un ajout de CO₂ au fluide de formation (4.1) refroidi, prévu pour le recyclage.

4. Procédé selon la revendication 3, **caractérisé en ce qu'**une quantité de 0,001 9_{CO2}/I_{Fluide de formation} jusqu'à 4 9_{CO2}/I_{Fluide de formation}, de préférence de 0,01 g_{CO2}/I_{Fluide de formation} jusqu'à 2 g_{CO2}/I_{Fluide de formation} est ajoutée au fluide de formation (4.1) refroidi, prévu pour le recyclage.

5. Procédé selon l'une quelconque des revendications 1 à 4, **caractérisé en ce qu'**une part (4.1) de 3% à 10% de la quantité totale de fluide de formation (4) refroidi est recyclée dans le forage de production.

6. Procédé selon l'une quelconque des revendications 1 à 5, **caractérisé en ce que** le mélange de la partie (4.1) recyclée du fluide de formation (4) refroidi avec le fluide de formation (2) chaud qui doit être convoyé s'effectue à l'intérieur du coffrage du forage de production.

7. Procédé selon l'une quelconque des revendications 1 à 6, **caractérisé en ce que** le mélange de la partie (4.1) recyclée du fluide de formation (4) refroidi avec le fluide de formation (2) chaud qui doit être convoyé s'effectue à l'intérieur du coffrage du forage de production, en-dessous de la pompe de refoulement (1).

8. Installation destinée à réduire l'entartrage lors de la récupération d'énergie à partir d'énergie géothermique, comportant
- une pompe de refoulement (1) placée dans un forage de production, destinée à convoyer un fluide de formation (2) chaud,
- un système de récupération d'énergie (3) situé hors sol, sous refroidissement du fluide de formation (2) chaud et génération d'un fluide de formation (4) refroidi,
- une colonne de production (5) reliant la pompe de refoulement (1) avec le système de récupération d'énergie (3),
- une colonne de recyclage (6) thermiquement isolée au moins par endroit, pour recycler une partie (4.1) de 2% à 12% de la quantité totale du fluide de formation (4) refroidi dans le forage de production, la colonne de recyclage (6) comportant un orifice de sortie placé à l'intérieur du forage de production,
- un forage de réinjection, écarté du forage de production, pour la réinjection du fluide de formation (4) refroidi restant.

9. Installation selon la revendication 8, **caractérisée en ce que** l'orifice de sortie de la colonne de recyclage (6) est placé à l'intérieur du coffrage du forage de production.

10. Installation selon la revendication 9, **caractérisée en ce que** l'orifice de sortie de la colonne de recyclage (6) est placé à l'intérieur du coffrage du forage de production, en-dessous de la pompe de refoulement.

11. Installation selon l'une quelconque des revendications 8 à 10, **caractérisée en ce que** l'extrémité inférieure de la colonne de recyclage (6) est reliée avec un mélangeur (8), l'orifice de sortie (9) du mélangeur (8) remplaçant l'orifice de sortie de la colonne de recyclage (6).

12. Installation selon l'une quelconque des revendications 8 à 11, **caractérisée en ce qu'**au moins une partie de la colonne de recyclage (6) est placée à l'intérieur de la colonne de production (5).

13. Installation selon l'une quelconque des revendications 8 à 12, **caractérisée en ce que** la colonne de recyclage (6) s'écoule au moins par endroits sensiblement à la parallèle de la colonne de production (5) et à l'extérieur de la colonne de production (5).

14. Installation selon l'une quelconque des revendications 8 à 13, **caractérisée en ce qu'**il s'agit d'une colonne de recyclage (6) à haute isolation thermique au moins par endroits, de préférence, d'une colonne de recyclage isolée sous vide au moins par endroits.

15. Installation selon l'une quelconque des revendications 8 à 14, **caractérisée en ce qu'**il est prévu un conduit d'alimentation de dioxyde de carbone (12), avant le recyclage du fluide de formation (4.1) refroidi dans le forage de production, un ajout de CO₂ au fluide de formation (4.1) refroidi prévu pour être recyclé s'effectuant à travers le conduit d'alimentation de dioxyde de carbone (12).
